# EUROPEAN PATENT APPLICATION

(11) **EP 4 664 318 A1**
(43) Date of publication of application: **17.12.2025**
(21) Application number: 25179138.0
(22) Date of filing: 27.05.2025
(51) Int. Cl.: G06F 16/3329, G06F 16/335, G06F 16/34, G06F 16/9032, G06F 16/9535, G06F 40/35, G06N 3/045

(54) **FUNCTION CALLING TO ENABLE MUTI-SOURCE DATA RETRIEVAL IN GENERATIVE ARTIFICIAL INTELLIGENCE SYSTEMS**

(30) Priority: 14.06.2024 US 202418743552
(71) Applicant: Microsoft Technology Licensing, LLC, Redmond, WA 98052 (US)
(72) Inventor: ASHFAQ, Atabak, Redmond, 98052 (US); GUHA, Satarupa, Redmond, 98052 (US); CAO, Haiyuan, Redmond, 98052 (US); HU, Yu, Redmond, 98052 (US)
(74) Representative: CMS Cameron McKenna Nabarro Olswang LLP

(57) **Abstract**

A generative artificial intelligence system includes a retrieval augmented generation (RAG) assistant that utilizes function calling to facilitate multi-source data retrieval to enhance user queries transmitted to a large language model (LLM). The RAG assistant transmits, to the LLM, a function selection instruction prompt that includes conversation history data, a function list including function definitions that each correspond to a data source, and instructions directing the LLM to return a function call to at least one function defined on the function list identified as relevant to the conversation history data based on a corresponding function descriptor. In response to receiving a function selection response from the LLM that includes the function call, the RAG assistant selects and executes a conditional operation based on a name of the at least one function.

## Description

### Background

Retrieval augmented generation (RAG) assistants are sometimes employed as an intermediary between a large language model (LLM) and an end user or compute system that sends queries to the LLM. The primary function of the RAG assistant is to translate a received query into an LLM prompt that includes relevant additional contextual information that can help the LLM to better answer the query. This additional contextual information can be helpful in a number of scenarios, such as when the user query relates to information that is external to the training dataset of the LLM, information that is incompletely described within the LLM training dataset, or in scenarios where the user desires a precise response that includes citations to source documents.

### Summary

In some aspects, the techniques described herein relate to multi-source data retrieval to enhance question-and-answer (Q&A) flows in a generative AI system. According to one implementation, a disclosed method comprises: receiving, from a user compute system, conversation history data including a query; and generating, by a retrieval augmented generative (RAG) assistant, a function selection instruction prompt for a large language model (LLM). The function selection instruction prompt includes at least the conversation history data, a function list including function definitions that each correspond to a data source and include a function descriptor that describes content of the data source; and instructions directing the LLM to return a function call to at least one function on the function list identified as relevant to the conversation history data based on the corresponding function descriptor. The method further provides for receiving, at the RAG assistant, a function selection response from the LLM including the function call and, based on the least one function identified within the function selection response, selecting and executing a conditional operation.

This summary is provided to introduce a selection of concepts in a simplified form that are further described below in the Detailed Description. This summary is not intended to identify key features or essential features of the claimed subject matter, nor is it intended to be used to limit the scope of the claimed subject matter.

Other implementations are also described and recited herein.

### Brief Descriptions of the Drawings

FIG. 1 illustrates an example of multi-source data retrieval performed as part of a question-and-answer flow facilitated by a generative artificial intelligence (AI) system.
FIG. 2A illustrates example aspects of a generative AI system including a retrieval augmentation generative (RAG) assistant that utilizes function calling to facilitate multi-source data retrieval.
FIG. 2B illustrates example operations of the RAG assistant in the generative AI system of FIG 2A.
FIG. 2C illustrates further example operations of the RAG assistant of the generative AI system of FIG. 2A-2B.
FIG. 2D illustrates additional example operations of the RAG assistant in the generative AI system of FIG. 2A-2C.
FIG. 2E illustrates further example operations performed by the generative AI system of FIG. 2A-2D.
FIG. 3 illustrates example operations for using function calling to facilitate conditional data flows that enable multi-source content retrieval within a generative AI system.
FIG. 4 illustrates an example computing device for use in implementing the described technology.

### Detailed Descriptions

Some artificial intelligence (AI) chat platforms utilize a RAG assistant as an intermediary between a large language model (LLM) and chatbot application that interacts with a user through a user interface. In response to receiving each new query from a user, the chatbot application provides the user inputs (e.g., the query along with other recent conversation data) to the RAG assistant. In response, the RAG assistant vectorizes the user inputs and queries a single document index (e.g., file repository or database) to identify stored data documents or portions of documents with corresponding vector representations that satisfy some degree of similarity with the vectorized user inputs. Data chunks identified as similar to the user inputs are assumed to be relevant and aggregated into what is referred to herein as "context data." The RAG assistant then generates an enhanced query that is passed to an LLM. This enhanced query typically includes the corresponding user query, the context data, and a directive instructing the LLM to utilize the context data to answer the user query.

Notably, the effectiveness of this existing approach is limited by the breadth and relevance of documents stored within the single document index that is accessed by the RAG assistant. In some scenarios, chatbot functionality could be improved by the capability of interactions with multiple independent knowledge sources. For example, an engineer may want to interact with documentation for different technical projects as well as corporate policies such as insurance policies, human resource (HR) policies, etc. Although it is possible for the engineer to ingest data of all of these different types of knowledge sources into a single document index, doing so potentially reduces chatbot performance by adding noise to the system. It is, for example, known that the likelihood of identifying a "best" document to answer a user question from a document index decreases in proportion to the number of documents in a document index. Further, there exist some scenarios where it is not possible to combine knowledge across different domains in a single document index due to the computational cost of reingestion or permission issues that prevent moving documents from one location to another.

The herein disclosed technology includes a RAG assistant equipped with logic that supports document retrieval from multiple independent data sources for enhancing user queries directed to LLMs. As used herein, a "data source" refers to a source that stores data chunks corresponding to data resources. The term data chunk refers to a resource (e.g., a text-based document or other form of media that can be converted to text) or a portion of a resource. A data source may store either unstructured data, such as documents or files, or structured data such as data corresponding to cells or graphical nodes defined with in a database.

According to one implementation, the herein-disclosed RAG assistant leverages a new capability of some AI models known as "function calling" to delegate, to a generative AI model (e.g., LLM), the task of selecting data source(s) that potentially store data chunks that may be relevant to a given user query. In this context, "function calling" refers to a technique that involves defining custom functions and providing those function definitions as input to a generative AI model, typically within a same prompt that also includes a "query" that the generative AI model is being asked to answer. While processing the user query, the generative AI model can then choose to delegate certain data processing tasks to those functions. For example, the generative AI model receives a prompt that includes a user question "What is the weather today in Seattle?" and that includes a list of functions with one function on the list being a weather-lookup function - e.g., "get_weather." In this scenario, the generative AI model selects the function that it identifies as most relevant to the user query and returns a call to the function that includes correctly-formatted input parameters (hence the name, "function calling"). Notably, the generative AI model does not, in this scenario, actually call the function it selects. Instead, the generative AI model returns a structured output that includes the name of the selected function and arguments that the model proposes the function be called with. This structured data can then be used to invoke external APIs that are used, such as by a RAG assistant, to procure an answer to the user query. In the above example pertaining to the query: "What is the weather today in Seattle?", a generative AI model may, for example, select the "get_weather" function, and return a function call that looks like "get_weather('Seattle, WA', 'Fahrenheit') that can be automatically executed by the RAG assistant, e.g., without modification.

Unlike existing applications of function calling, the herein-proposed use of function calling does not necessarily entail calling all or any of the functions defined within the list of function definitions passed as input the LLM. Instead, function calling is leveraged as a tactic to force the LLM to select outputs from a group of approved, structured responses in a manner akin to answering a multiple-choice question. Thus, some or all function definitions in the function list passed to the LLM can be "dummy functions" that do not actually exist. This technique has been shown to markedly reduces hallucinations in LLM responses (particularly with respect to out-of-domain responses, as is discussed in more detail below). Additionally, the use of this technique makes it possible to implement conditional flows that cause the RAG assistant to perform different actions dependent upon the different, predictable (e.g., multiple-choice style) outputs of the LLM.

In one implementation, function calling is invoked as a way of asking the LLM to select relevant data source(s) that may be used to answer a user query. When this technique is employed, the RAG assistant passes the LLM with a list of function definitions along with an instruction directing the LLM to return a call to the function most relevant to the user query. At least some of the functions included in the list correspond to data sources, and the LLM evaluates descriptors of each function to assess relevance of each data source to the user query. The LLM then returns a function call identifying a selected function that corresponds to a data source, and the RAG assistant queries the data source to identify specific data chunks residing in the data source that are potentially-relevant to the user query.

In some implementations, the RAG assistant may, following the above-described operations, generate and transmit a follow-up prompt that includes the data chunks mined from the data source selected by the LLM, along with an instruction directing the LLM to verify suitability of the data chunks for answering the user query. This request is again conveyed via function calling- e.g., the LLM is asked to (1) return a particular function call if the data chunks appear to be usable to answer the user question or (2) to return a different function call corresponding to an alternative data source if the LLM determines that more information is needed to answer the question and that the alternative data source is potentially relevant to the query. After the LLM (eventually) confirms that a given selection of data chunks is usable to answer the user query, the RAG assistant then proceeds to generate another LLM prompt, referred to herein as a "context-enhanced query" that includes a final selection of data chunks and an instruction directing the LLM to use the final selection of data chunks to answer the user query. The RAG assistant then receives the LLM's response and relays this response to the back to the requestion user or compute system.

The herein-disclosed technology also improves upon the accuracy and reliability of "out-of-domain responses," which are currently supported by some RAG systems. An "out-of-domain" response refers to a response that is delivered to a user when the user's question cannot be answered by from a list of resources (e.g., documents) that are made available, e.g., by a RAG assistant, to an LLM to answer a question. Users that interact with RAG assistants often desire precise, verifiable answers to specific questions, and therefore place high value on the RAG assistant's capability of delivering accurate, reliable "out-of-domain" responses. To these users, an "I don't know" response is a higher quality response than a response that am LLM derives independently, e.g., from its own corpus of training data, in scenarios where documents provided by a RAG assistant do not include information suitable to answer a given user query.

In existing systems that support out-of-domain responses, a RAG assistant typically passes a user query to an LLM along with a collection of potentially relevant resources (referred to herein as "context data"), and also provides a directive that instructs the LLM to answer the user query based on the context data, and with citation(s) to such sources, instead of answering from its own corpus of training data. For example, a RAG assistant may - in the existing framework - provide an LLM with a directive such as "here is a user question and are some documents that I have identified as potentially relevant to the user's question. Try to answer the user question from these documents and return 'out-of-domain' if you find that the question cannot be answered from the documents." While this approach is sometimes effective, errors rates are still higher-than-desired because LLMs often get confused by complicated questions. A primary reason for these errors is that, in this existing approach, the LLM is provided multiple instructions in one prompt, including (1) an instruction to use context data (e.g., documents provided by the RAG assistant) to answer the user query; and (2) an instruction to return "out-of-domain" when the context data is insufficient to answer the user query. In complex query scenarios that also involve these types of multi-step instructions, LLMs sometimes miss "parts" of the instructions, and generate responses from their own knowledge and/or hallucinate irrelevant or incorrect answers.

The herein-proposed techniques improve upon accuracy of out-of-domain responses (e.g., ensuring these responses are delivered reliably at appropriate times), in part, by methodologically reducing complexity of instructions received by the LLM within any individual prompt. According to one method disclosed herein, the LLM receives a first prompt that asks the LLM to assess relevance of data sources as a stand-alone question - e.g., without asking the LLM to also answer the user query at the same time. The LLM's response to this first prompt then serves as a trigger that allows the RAG assistant to select between different conditional logical branches that guide the remainder of the Q&A flow, as is described in further detail herein.

In addition to the above-noted improvements upon the accuracy rate of out-of-domain responses, the disclosed technology also dramatically reduces latencies in scenarios where "out-of-domain" is the correct and desired response. This is because data source relevance can be assessed at the data source level rather than at the resource/document level, allowing the system to abort if none of the data sources appear relevant. Notably, in the above-described existing (previous) approach, the LLM is asked to assess relevance of documents to a query only *after* the RAG assistant first mines a document source to identify the documents. This mining for relevant context data is computationally expensive and entails vector comparisons between vectorized user inputs and each of many different vectorized documents. The herein-disclosed techniques reduce latency as compared to the above-described existing framework by affording the LLM the opportunity to return an out-of-domain response based on descriptors of those data sources, which can occur before the RAG assistant begins searching those data sources for relevant documents.

These and other advantages will be made apparent from the following descriptions of the figures.

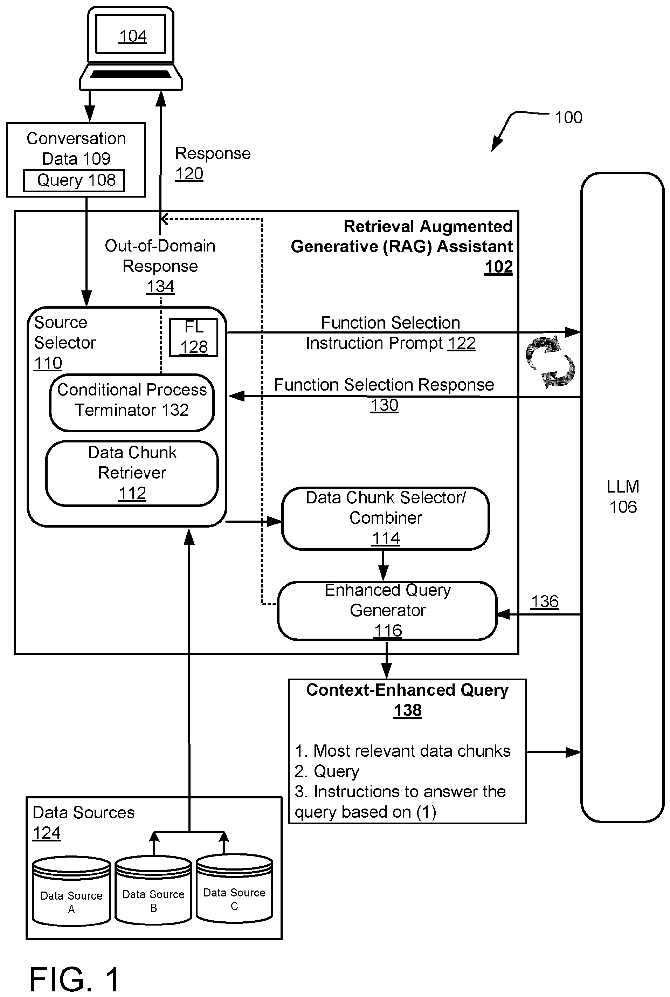

FIG. 1 illustrates an example of multi-source data retrieval performed as part of a question-and-answer (Q&A) flow facilitated by a generative AI system 100. The generative AI system 100 includes a RAG assistant 102 that supports document retrieval from multiple document sources. The RAG assistant 102 includes software executed by one or multiple devices (e.g., servers) coupled across a network. As shown in FIG. 1, the RAG assistant 102 acts as an intermediary that supports communications between a compute system 104 and a large language model (LLM) 106. The function of the RAG assistant 102 is to modify user queries that arrive from the compute system 104 by enhancing those queries with additional information - "context data" - that the LLM 106 in turn uses to generate responses to user questions. In some implementations, the compute system 104 includes a compute device that a user interacts with to provide inputs to a web-based application. For example, the web-based application is a chat bot that conveys queries (user questions) to the generative AI system 100. In other implementations, the compute system 104 includes a cloud-based device (e.g., server) or an edge computing devices that generates queries on behalf of a computer process, such as a computer process executed on a user device or by a cloud-based application.

In FIG. 1, the compute system 104 is shown transmitting conversation data 109 to the RAG assistant 102. The conversation data 109 may be understood as including a specific query 108 (e.g., a most recently-asked question) as well as aspects of a conversation history between the compute system 104 and the LLM 106. For example, the conversation data 109 may store all questions asked and answers received during a current web session of a user or over some other period of time. The RAG assistant 102 is shown including various subcomponents including a source selector 110, a data chunk retriever 112, a multi-source chunk combiner 114, and an enhanced query generator 116, that collectively perform actions that improve accuracy of an LLM-generated response (e.g., response 120) to the query 108.

In response to receiving the query 108, the source selector 110 prepares a first LLM prompt, shown in FIG. 1 as "function selection instruction prompt 122." This prompt functions to direct the LLM 106 to select data source(s) likely to be relevant to the query 108. This is achieved by including, in the function selection instruction prompt 122, a function list 128 (shown as FL 28) including functions that correspond to data sources in a group of approved data sources 124. Additionally, the function selection instruction prompt 122 includes an instruction that directs the LLM to return a function call to the function that appears most relevant to the query 108.

When initially configuring the source selector 110, an administrator or end user identifies the approved group of data sources 124 that are to be used by the LLM 106 to answer incoming queries. The function list 128 may be defined manually or, in some implementations, by fully or partially automated process, such as a process that compiles the function list 128 in response to receiving user input identifying the group of approved group of data sources 124 and/or that parses data residing in each respective one of the approved data sources 124 to automatically generate a function descriptor that is included within each function definition on the function list 128.

In one implementation, the function list 128 includes a different function corresponding each data source in the group of approved data sources 124. For example, in the illustrates case where the group of data sources 124 includes Data Source A, Data Source B, and Data Source C, the function list 128 includes include a first function "Get_From_Data_Source_A"; a second function "Get_From_Data_Source_B" and a third function "Get_From_Data_Source_C." Each of these functions includes a function descriptor that describes the type of documents that is stored in the associated data source. The function descriptor may generally describe the topic(s) or themes of the documents, such as by summarizing those topics/themes, listing the top keywords appearing across all or selection of documents in the data source, or via other suitable method. If, for example, data Source A is a database storing how-to/help documentation for a software team, the function descriptor for "Get_From_Data_Source_A" may read: "[t]his data source includes documentation specific to [Service X] including usage and debugging, as well as information on how to troubleshoot errors, setup the system, or usage details...Topics covered include security features in [ Service Y], API management in [service Z], and secured virtual hubs for enhanced network traffic security...."]. Each function definition on the function list 128 may also define parameters and corresponding data types that are to be passed as input to the corresponding functions.

In addition to including the function list 128 and the instruction to return a call to a relevant function, the function selection instruction prompt 122 also includes the conversation data 109 (e.g., a conversation history and the query 108).

In various implementations, the LLM 106 is any of a variety of types of generative AI models trained to process and respond to natural language queries and that is also trained to support function calling, as described herein. In one implementation, the LLM 106 is a publicly-available third-party model such as a transformer-based model (e.g., a generative pre-trained transformer (GPT) model, an Open Pretrained Transformer (OPT) model, or Bioscience Large Open-science Open-access Multilingual (BLOOM) model), a seq2seq models, a long short-term memory network (LSTM model), or a recurrent neural networks (RNNs). By further example, GPT-4 is one GPT model that currently support function calling and it is expected that other models may be trained to support this capability in the future.

Using the functional calling capability learned from its training dataset, the LLM 106 analyzes the conversation data 109 in view of the function descriptors included in the function list 128 and returns a function selection response 130 that includes a call to at least one function on the function list 128. For example, the function selection response 130 returns a function call: "Get_Data_From_Data_Source_A(ConversationData) where "Get_Data_From_Data_Source_A" is a function in the function list 128 with a function descriptor describing the contents of Data Source A and ConversationData is a string-type variable that stores the conversation data 109.

In one implementation, the function list 128 passed to the LLM 106 includes at least some function definitions that do not correspond to data sources. For example, the function list 128 may include an out-of-domain function with a function descriptor that includes a directive instructing the LLM 106 to return a call to the out-of-domain function when none of the other functions on the function list 128 are identified as relevant to the query 108 (e.g., the equivalent of returning an "out-of-domain response", as discussed elsewhere herein).

In FIG. 1, the source selector 110 is shown to include a conditional process terminator 132 that conditionally terminates the present Q&A flow by returning an "out-of-domain response 134" to the compute system 104 when the function selection response 130 includes a call to the above-described "out-of-domain function." In this scenario, the Q&A flow is effectively terminated with respect to the query 108 before the RAG assistant 102 performs any computations to identify relevant documents (e.g., computations described below with respect to the data chunk retriever 112). This conditional termination of the Q&A flow at this point in time significantly reduces LLM hallucinations and also reduces system latencies observed in "out-of-domain" response scenarios as compared to the existing RAG systems. This is because the LLM 106 is not, in the illustrated Q&A flow, asked to answer the query 108 at the same time that it is being asked to assess relevance of data source(s) and/or documents, which reduces the likelihood of "missed instructions" or mis-interpreted instructions.

In other instances of the illustrated back-and-forth flow between the RAG assistant 102 and the LLM 106, the function selection response 130 includes a function call corresponding to a data source (e.g., rather than a call to the out-of-domain function). In this case, the conditional process terminator 132 does not terminate the flow. Instead, the returned function call(s) are passed to the data chunk retriever 112 which, in turn, selectively performs data-mining operations by querying data sources that correspond to the function(s) identified in the returned function call(s).

Assume, for example, that the function selection response 130 includes function calls to two functions "Get_From_Data_Source_A", which corresponds from Data Source A and "Get_From_Data_Source_B", which corresponds to Data Source B. In this scenario, the data chunk retriever 112 executes a first function call to "Get_From_Data_Source_A" to retrieve potentially relevant data chunks from Data Source A and a second function call to "Get_From_Data_Source_B" to retrieve potentially relevant data chunks from Data Source B. By further example, "Get_From_Data_Source_A" may correspond to a function that, when executed, perform operations that include (1) vectorizing the conversation data 109; (2) computing a similarity metric between the vectorized conversation history and each of multiple stored vectors corresponding to data chunks stored in Data Source A, such as by computing a dot product or cosine similarity; and (3) returning a subset of the identified data chunks that satisfy similarity criteria with the conversation history, such as a semantic or contextual similarity that may be evaluated based on the computed dot product or cosine similarity value.

In other implementations, the data chunk retriever 112 does not execute the function call(s) returned in the function selection response 130. For example, the function "Get_From_Data_Source_A" is not a real function and instead serves as a trigger that causes the data chunk retriever 112 to execute a conditional branch of logic that provides for mining Data Source A for potentially relevant data chunks, such as by invoking logic similar to the above-described vector analysis or other suitable approach.

In some implementations, the source selector 110 ant LLM 106 iterate back-and-forth with multiple instances of the function selection instruction prompt 122 and multiple instances of the function selection response 130 before finalizing a selection of data chunks for use in answering the query 108. For example, the source selector110 may query Data Source A for potentially-relevant data chunks in response receiving a first instance of the function selection response 130 that includes a function call corresponding to Data Source A. Following this, the source selector 110 may send a modified version of the function selection instruction prompt 122 that includes the identified potentially-relevant data chunks (e.g., from Data Source A) along with an instruction asking the LLM 106 to return a particular function call (referenced elsewhere herein as "Chunks_Verified_as_Good") if the query 108 can be answered suitably using the potentially-relevant data chunks or, alternatively, to return a call to one or multiple other functions if the LLM determines that any such functions appear potentially relevant to the query 108 *and* the potentially-relevant data chunks are insufficient to answer the query 108. In this way, the source selector 110 and the LLM 106 can iterate back-and-forth until the LLM v106 verifies that a selected data source is adequate.

Once a selection of potentially-relevant data chunks is finalized from one or multiple of the approved data sources 124, the potentially relevant data chunks are optionally passed to a multi-source data chunk selector/combiner 114, and the multi-source data chunk selector/combiner 114 performs actions to select (or in some cases generate) a set of "most relevant data chunks" corresponding to a subset of the potentially relevant data chunks. This step serves to limit the length of context data that is ultimately passed back to the LLM 106 in a subsequently-constructed prompt, shown in FIG. 1 as "context-enhanced query 138." Limiting the length of this context data is desirable in view of stringent LLM prompt length limits and also desirable in view of the fact that LLM accuracy tends to decrease in direct proportion to the number of data chunks provided as context data within any individual prompt (e.g., because additional data sources create more "noise" that the LLM has to evaluate, increasing the potential for error)

In one implementation, the multi-source chunk combiner 114 identifies the most-relevant data chunks by ranking the potentially-relevant data chunks in order of a determined degree of similarity to the conversation data 109 (e.g., based on vector comparisons), and by then selecting a top-ranked predetermined number (N) of the data chunks to include in context data of the context-enhanced query 138. In another implementation, the multi-source data chunk selector/combiner 114 generates a short summary of each data chunks, such as by providing the data chunk to an AI model that has been trained to summarize data excerpts. The resulting summaries are then combined together in some way such that the LLM 106 receives a set predefined number of "data chunks" regardless of the number of identified potentially relevant chunks. For example, the multi-source data chunk selector/combiner 114 executes logic to output a static number (N) of most relevant data chunks, with some or all of the N most relevant data chunks being generated by concatenating together summaries of the potentially-relevant data chunks. For example, a first one of the most relevant data chunks is created by concatenating together summaries corresponding to potentially-relevant data chunks retrieved from a first one of the approved data sources 124; a second of the most relevant data chunks is created by concatenating together summaries corresponding potentially-relevant data chunks retrieved from a second one of the approved data sources 124, etc.

In still other implementations, the multi-source data chunk selector/combiner 114 performs some other combination of the above-described summarization/concatenation and vector-based ranking techniques. For example, the multi-source data chunk selector/combiner 114 creates summaries of the potentially-relevant data chunks, generates new data chunks by concatenating together summaries from a same data source, and then performs a vector analysis to select N (e.g., 5, or some other number) of the highest ranked new data chunks (e.g., most similar to the conversation data 109) before returning those highest-ranked new data chunks as the "most relevant data chunks."

In implementations where the source selector 110 identifies fewer than a threshold number of potentially-relevant data chunks, the above-described operations of the multi-source data chunk selector/combiner 114 may be skipped entirely and the group of potentially-relevant data chunks is used in the manner described below with respect to the "most relevant data chunks."

A user query executor 115 receives, from the multi-source data chunk selector/combiner 114, an identified set of most relevant data chunks. The user query executor 115 generates a context-enhanced query 138 that includes the set of most relevant data chunks, the user query, and an instruction to the LLM to answer the user query using the set of the most relevant data chunks. This step is substantially unchanged from existing RAG systems except for the fact that the context-enhanced query 138 does not include an instruction asking the LLM 106 to verify adequacy/relevance of the most relevant data chunks, as this has already been determined at this point in time. Notably, the above-described operations provide for using two separate prompts - e.g., a first prompt directing the LLM 106 to verify accuracy/suitability of the data chunks and a second prompt directing the LLM 106 to answer the query 108. The separation of these instructions into separate prompts reduces likelihood of hallucinations in a final response 136 that the LLM returns to the enhanced query generator 116. Content of this final response 136 is relayed back to the compute system 104 in response 120.

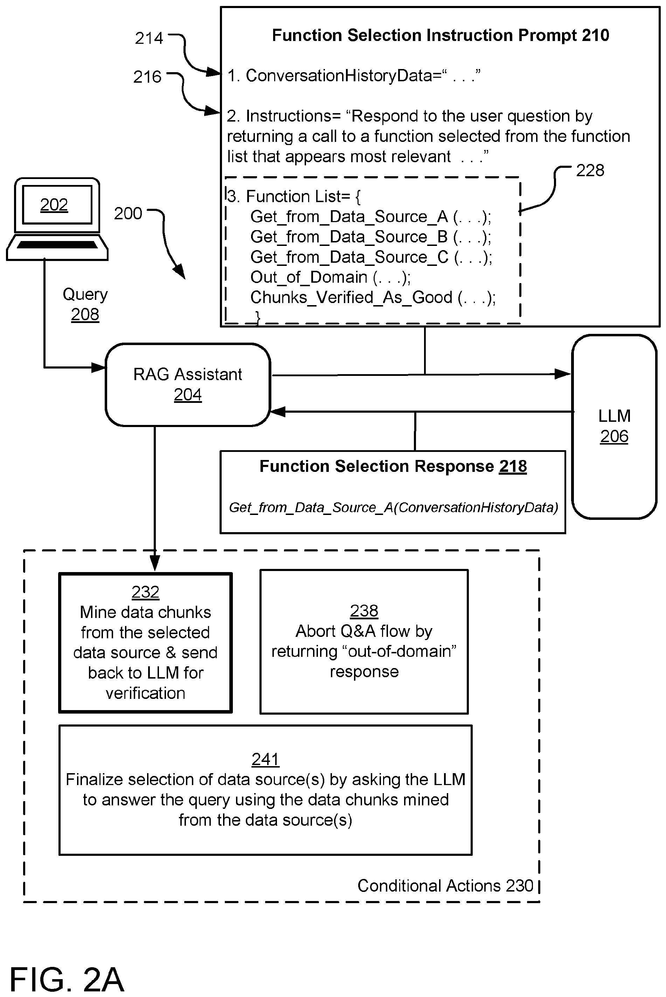

FIG. 2A illustrates example aspects of a generative AI system 200 that includes a RAG assistant that utilizes function calling to facilitate multi-source data retrieval. In the example shown, a user compute system 202 is illustrated transmitting a query 208 to the generative AI system 200. By example, the query 208 could be a question such as "how many pairs of glasses will my insurance pay for this year?" In response to receiving the query 208, the RAG assistant 204 generates and transmits a function selection instruction prompt 210 to the LLM 206. The function selection instruction prompt 210 includes conversation history data 214, which may be understood as including the query 208 along with other textual (e.g., natural language) inputs received from the user compute system 202 relating to some portion of a conversation between the user compute system 202 and the LLM 206. The query 208 represents the last question that was asked by the user compute system 202 during the ongoing conversation.

In addition to the conversation history data 214, the function selection instruction prompt 210 is shown to include a function list 228 that includes function definitions and a set of instructions 216. In the illustrated example of FIG. 2A, these instructions read "respond to the user question by returning a call to a function selected from the function list that appears most relevant. . ." In an actual implementation, the set of instruction 216 may be considerably more complex, such as to include some or all instructions similar to an exemplary set of instructions shown in Table 1, below.

The function selection instruction prompt 210 additionally includes a function list 228 with various function definitions, each of which may or may not correspond to a real function that can be executed by the RAG assistant 204. Although not shown, it is implied that each function defined in the function list 228 includes a function descriptor and also a description of input parameters and corresponding data types accepted by the function. Some of the functions on the function list 128 correspond to data sources in an approved group of data sources (not shown). Each function definition corresponding to a data source includes a function descriptor that describes the type of data stored in the data source. For example, the descriptor for such a function summarizes repeated keywords that appear with prevalence across the data chunks stored within the data source and/or topics or themes that can be inferred based upon the repeated keywords.

In the example shown, the function list 228 includes three exemplary function definitions that correspond to data sources- e.g., a first function named "Get_From_Data_Source_A" corresponds to Data Source A; a second function named "Get_From_Data_Source_B" corresponds to Data Source B; and a third function named "Get_From_Data_Source_C" corresponds to Data Source C. Additionally, the function list 228 includes functions named "Out_of_Domain" and "Chunks_Verified_as_Good." These functions do not correspond to data sources. The "Out_of_Domain" function represents a function that is to be returned by the LLM 206 when the query 208 is "out-of-domain" - meaning, there is no available data source that is relevant to the query 208. The Out_of_Domain function definition includes a function descriptor that generally instructs the LLM 206 to call the "Out_of_Domain" function when the conversation history data 214 does not appear relevant to any of the other functions defined within the function list 228. By example, a suitable function descriptor for the "Out_of_Domain" function may read; "This data source includes documents relevant to all other topics that can be answered from general knowledge. Never call this function if the question is relevant to other functions based on the corresponding function descriptors."

The Chunks_Verified_As_Good function shown in the function list 228 represents a function that the LLM 206 is to return when the function selection instruction prompt 210 includes data chunks that have been mined from a data source, and the LLM 206 has also verified that the data chunks are usable to answer the query 208.

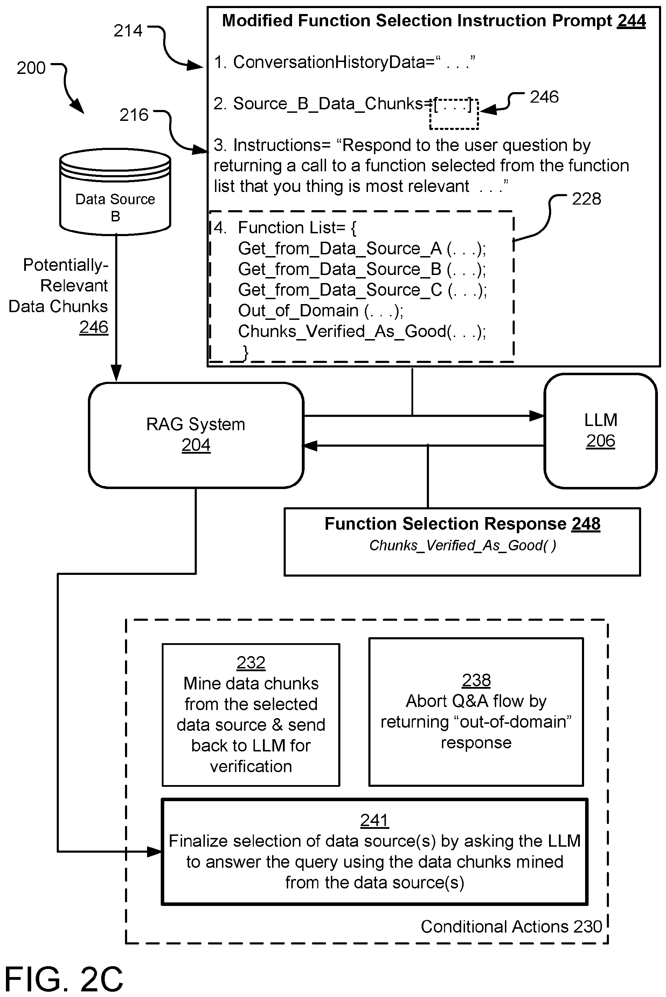

In the example of FIG. 2A, the function selection instruction prompt 210 does not include any data chunks; therefore, the LLM 206 should not, in the illustrated scenarios, return a call to the Chunks_Verified_As_Good function. An example invocation of this function is discussed in greater detail with respect to FIG. 2C, below.

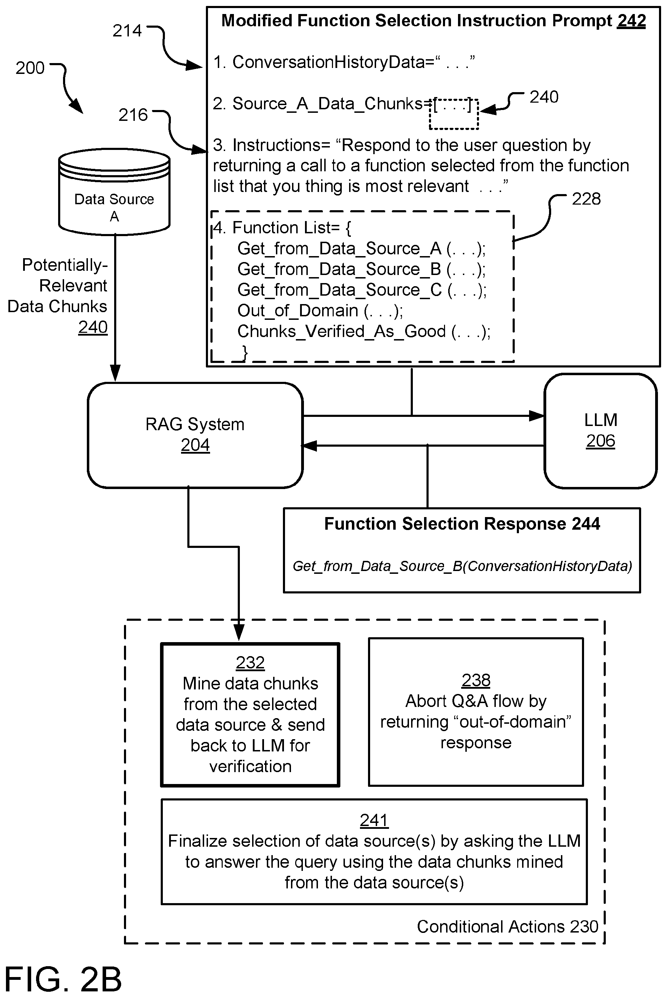

Table 1 below sets forth an exemplary set of instructions that may be included in the function selection instruction prompt 210 (e.g., as the instructions 216), as well as in subsequently-transmitted function selection prompts relating to the query 208. Notably, the examples shown in FIG. 2A, 2B, and 2C illustrates different function selection prompts that are iteratively sent to the LLM 206 in relation to a same query - e.g., all pertaining to a selection of data source(s) for answering the query 208. In the examples provided, each of these different function selection prompts includes the instructions 216 (e.g., instructions that may be the same or similar to those shown in Table 1). However, in other implementations, the RAG assistant 204 may modify the set of instructions 216 each time it is iteratively transmitted to the LLM in relation to a same query, such as depending upon factors such as when the prompt is sent relative to receipt of the query 208 (e.g., whether or not the function selection instruction prompt 210 is the first prompt generated by the RAG assistant 204 in response to receiving the query 208) and/or based on the nature of outputs provided by the LLM 206 in response to previous iterations of the function selection instruction prompt 210 for the query 208, if any such previous iterations exist.

| Table 1: Example Instructions included in Function Selection Instruction Prompt | |
|---|---|
| *You have access to multiple functions each that might be used to answer user questions. You can select them based on their description to guess which functions might be useful to answer the questions. Don't assume anything, you don't know anything other than the information you have been told. Please use the latest query in context of past conversation history to follow the steps below....* | |
| *You are break down the question answer problem in three steps:* | |
| *1. Retrieval: You are equipped with an assistant that has access to multiple document sources which it can search for relevant documents to answer the user query. Use the Assistant to query relevant documents based on user query using one of the functions included in the function list. The Assistant returns documents using the functions available to it but does not answer the user question itself.... The Assistant is also provided with a function called {Out_of_Domain}. If none of the other functions are relevant to user query, please use {Out_Of_Domain} to retrieve documents for all other queries.* | |
| *2. Reading: if this prompt includes documents retrieved from a previous instance of "retrieval" related to the user query, determine whether the retrieved documents can answer the user query. Based on steps below, you can choose to either repeat the retrieval step or proceed to the answer step.* | |
| | *a. If the retrieved documents are sufficient to answer the query from selected function: You have the right documents to answer the question! You can go to answer step.* |
| | *b. If the retrieved documents demonstrate that query is not related to documents in selected function: You can call other retrieval functions out of {Function_List} based on the function descriptors again.* |
| | c. *If the retrieved documents demonstrate that a different query is needed for same function: You should modify the query parameters and call the function again with the correct method.* |
| *3. Answer: Based on the correct retrieved documents you can answer user query. You **can never answer user directly**. Please always use "{Chunks_Verified_As_Good}" to answer the question. Calling* "{ *Chunks_Verified_As_Good }" will ensure answers are safe and follow pattern needed for user.* | |
| ... | |

In the example of FIG. 2A, the function selection instruction prompt 210 does not include any data chunks because the prompt is the first iteration of its kind with respect to the query 208. Upon receipt of the function selection instruction prompt 210, the LLM 206 reviews the set of instructions 216 (or alternatively, instructions the same/similar to those shown in Table 1) and searches function descriptors in the function list 228 for a description of a data source that appears relevant to the query 208. In the above-mentioned example where the query 208 includes the question: "how many pairs of glasses will my insurance pay for this year?" the LLM 206 reviews the function descriptors of the functions in the function list 228 in an effort to identify terms or phrases that share a learned degree of semantic or contextual similarity with words in the query 208 and/or the remainder of the conversation history data 214 (e.g., other questions previously asked by the user). For example, the LLM 206 may search the descriptors of other functions for terms such as "insurance", "medical", "optical" and the like and determine that the function named "Get_from_Data_Source_A" has a function descriptor that describes medical documents (e.g., medical records). In this example, the LLM 206 determines that "Get_from_Data_Source_A" is the most relevant function. Therefore, the function selection response 218 includes a call to this function with a string input parameter set equal to the conversation history data 214.

Based on the identity of the function returned in the function selection response 218, the RAG assistant 204 selects one of a predetermined number of conditional actions 230. Each of the conditional actions 230 corresponds to a different logical branch of code triggered by inclusion of a particular string (e.g., function name) in the function selection response 218.

In the example shown, the RAG assistant 204 does not execute the function call returned in the function selection response 218. Instead, this function call (e.g., Get_from_Data_Source_A(ConversationHistoryData)) merely serves as a trigger causes the RAG assistant 204 to select one of multiple code branches that the RAG assistant 204 is configured to execute in the alternative depending upon the name(s) of the function(s) returned by the LLM 206. In the example shown, the RAG assistant 204 matches the returned function name ("Get_from_Data_Source_A") to a string included in a conditional statement that, when satisfied, triggers execution of a conditional logic branch 232. The logical branch provides for mining data chunks from the data source corresponding to the function name (e.g., Data Source A) and sending the data chunks back to the LLM 206 for verification.

FIG. 2B illustrates example operations of the RAG assistant 204 in the generative AI system 200 of FIG 2A that are performed following operations discussed respect to FIG. 2A. More specifically, FIG. 2B illustrates operations of the RAG assistant 204 following selection of the first conditional logic branch 232. During execution of the conditional logic branch 232, the RAG assistant 204 mines Data Source A for potentially-relevant data chunks 240, which are to be understood as data chunks that are identified as satisfying a similarity metric with the conversation history data 214. The similarity metric is, for example, a metric that quantifies contextual and/or semantic similarity between textual strings. In one implementation, the RAG assistant 204 identifies the potentially-relevant data chunks 240 by vectorizing the conversation history data 214 and computing a dot product or cosine similarity between the resulting vector and vectorized representations of different data chunks residing in Data Source A. Data chunks identified, based on this computation, as most similar to the conversation history data 214 are selected as the potentially-relevant data chunks 240. For example, the potentially-relevant data chunks represent a predefined N number of data chunks identified as most similar to the conversation history data 214 or that satisfy some other predefined similarity criteria with the conversation history data 214, such as by having an associated similarity metric that exceeds a threshold or that is within a specific range of values.

In response to mining the potentially-relevant data chunks 240 from Data Source A, the RAG assistant 204 generates a first modified function selection instruction prompt 242, that includes some or all of the same elements discussed with respect to the function selection instruction prompt 210 of FIG. 2A, including the conversation history data 214, the set of instructions 216, and the function list 228. Additionally, the first modified function selection instruction prompt 242 includes the potentially relevant data chunks 240 mined from Data Source A.

Upon receiving the first modified function selection instruction prompt 242, the LLM 206 again evaluates the instructions 216 (again, described in more comprehensive detail in Table 1). Upon reading the instructions 216, the LLM 206 evaluates the potentially-relevant data chunks 240 in view of the conversation history data 214 and determines that the data chunks do not actually include the answer to the query 208. For example, the potentially-relevant data chunks 240 may relate to past insurance claims (e.g., if the data source A is a medical history database) that do not include any insurance coverage information for the user for the present year. In response, and in accord with the instructions 216, the LLM 206 elects to call another function - "Get_from_Data_Source_B" because this function has a function descriptor that also appears potentially relevant to the query 208 and/or other aspects of the conversation history data 214. In response to this selection, the LLM 206 returns another function selection response 248 that includes a call to the newly-selected function.

Upon receiving the function selection response 248, the RAG assistant 204 determines that the returned function call satisfies criteria for selecting the same conditional logic branch again (e.g., conditional branch 232 that is, for example, triggered when the function selection response 248 identifies any one of the function names corresponding to data sources). This time, however, the RAG assistant 204 mines data chunks from the newly-elected data source (Data Source B) instead of data source A.

Depending on content of the set of instructions 216, there may exist scenarios where the LLM 206 determines that the potentially-relevant data chunks 240 are relevant but also insufficient to fully answer the query 208. In this scenario, LLM 206 could return response that includes multiple function calls - e.g., the same function call previously returned (e.g., "Get_from_Data_Source_A( )") in addition to calls to one or more functions corresponding to other data sources identified as potentially relevant (e.g., "Get_from_Data_Source_B( )"). In this type of scenario where the function selection response 248 includes multiple function calls, the RAG assistant 204 responds by mining potentially-relevant data chunks from all data sources corresponding to functions named in the function selection response 248 (e.g., per the above-described methodology) and may further performs actions for combining and/or selecting between the data chunks returned across all mined sources, such as by performing operations described with respect to the multi-source data chunk selector/combiner 114 of FIG. 1, so as to limit the number of data chunks provided back to the LLM 206 and thereby improve quality of the LLM's eventual response to the query 208.

FIG. 2C illustrates further example operations of the RAG assistant 204 of the generative AI system 200 that are performed following the operations discussed with respect to FIG. 2B. Here, in response to receiving the function selection response including the function call to "Get_from_Data_Source_B," the RAG assistant 204 mines Data Source B for a new set of potentially-relevant data chunks 246 and generates a second modified function selection instruction prompt 244 that includes the same types of information as in the previous iteration except for now including the data chunks mined from Data Source B instead of Data Source A.

In response to receiving the second modified function selection instruction prompt 244, the LLM 206 again evaluates the set of instructions 216 (again, described in more comprehensive detail in Table 1) and evaluates the potentially-relevant data chunks 246 in view of the query 208. This time, the LLM 206 determines that the data chunks include sufficient information to answer the query 208. At this point in time, the LLM 206 does not generate a response to the query 208. Instead, the LLM 206 responds by returning a final selected function-e.g., a call to the "Chunks_Verified_as_Good" function (shown in FIG. 2C within function selection response 248). This serves to indicate that the current selection of data chunks (e.g., the potentially-relevant data chunks 246 mined from Data Source B) are usable to answer the query 208.

In response the receiving the function selection response 248, the RAG assistant 204 determines that the returned function call includes a string (e.g.,"Chunks_Verified_as_Good") that matches a conditional statement triggering execution of a different logic branch - e.g., conditional branch 241, which provides for finalizing the selection of data source(s) and proceeding to prompt the LLM to answer the query using the currently-selected set of potentially-relevant data chunks (e.g., the potentially-relevant data chunk 246, mined from data source B).

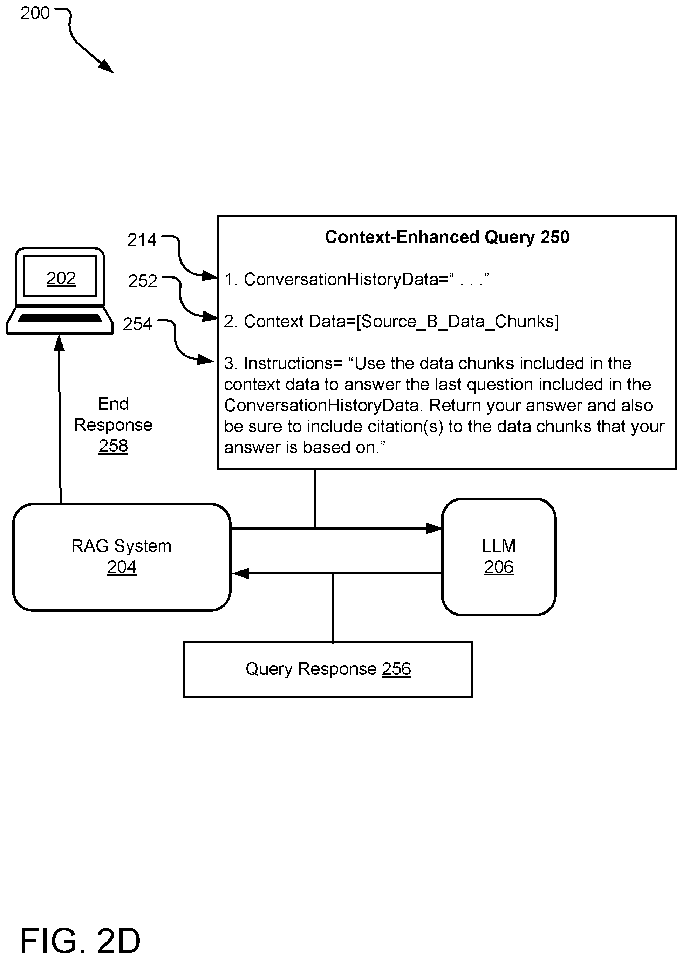

FIG. 2D illustrates example actions of the RAG assistant 204 in the generative AI system 200 following the operations described with respect to FIG. 2C. After receiving, from the LLM 206, the function call to the "Chunks_Verified_as_Good" function, the RAG assistant 204 finalizes the selection of the data source (e.g., Data Source B) and proceeds to generate a context-enhanced query 250. The context-enhanced query 250 includes context data 252 including each of the data chunks mined from the selected data source, as generally described with respect to FIG. 2C. The context-enhanced query 250 also includes the conversation history data 214 and an instruction 254 directing the LLM 206 to answer the query 208 using the context data 252.

The LLM 206 processes the context-enhanced query 250 and responds with query response 256, which includes a specific answer to the query 208. In the example referenced with respect to FIG. 2A where the query 208 is "How many pairs of glasses will my insurance pay for this year?" the query response 256 includes a specific answer to this question (e.g., "Your 2024 insurance plan through [Optical Insurance Provider Name] will pay for [X] pairs of glasses"). The RAG assistant 204 returns, to the user compute system 202, an end response 258 that includes the query response 256 or a slightly modified version thereof (e.g., a reworded/changed response that substantially conveys content of the query response 256).

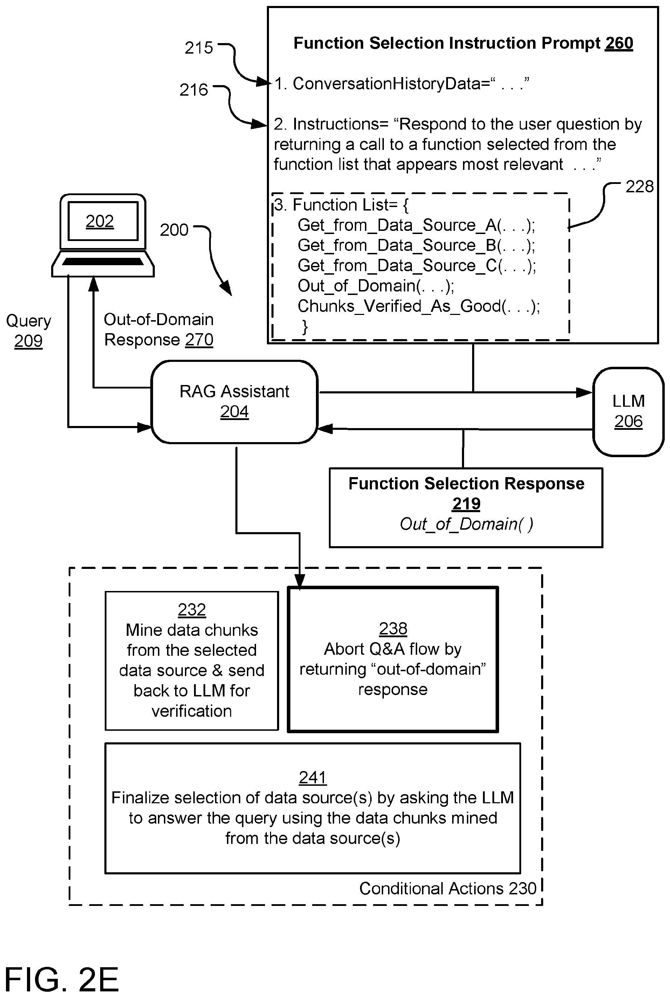

FIG. 2E illustrates further example operations performed by the generative AI system 200 of FIG. 2A-2D. At a time represented by FIG. 2E, the generative AI system 200 receives a new query 209 from the user compute system. The new query 209 asks a question that is different from the query 208 discussed with respect to FIG. 2A-2D. For example, the user switches topics and asks: "what tax bracket am I in?" In this case, the RAG assistant 204 generates a new function selection instruction prompt 260 that includes conversation history data 215 (e.g., the last question "what tax bracket am I in" in addition to several previous questions asked via the same user compute system 202, and LLM responses to those previous questions, provided during the same conversation). The new function selection instruction prompt 260 includes the instructions 216 and the function list 228 that include the same content described above with respect to FIG. 2A-2D.

In this scenario, the LLM 206 evaluates the conversation history data 215 in view of the function descriptors for each function in the function list 228 and determines that there is no function descriptor that appears relevant to the new query 209. Consequently, the LLM 206 returns a function selection response 219 that includes a call to the "Out_of_Domain" function.

Upon receiving the function selection response 219, the RAG assistant 204 determines that the returned function call satisfies criteria for selecting yet another conditional logic branch - conditional branch 238, which provides for aborting the current Q&A flow and returning an "out-of-domain" response to the user compute system 202. Consequently, the RAG assistant 204 responds to the user compute system 202 with an out-of-domain response 270, e.g., "your question could not be answered by any of the available data sources." In this scenario, the RAG assistant 204 does not perform any computations to assess relevance of data chunks; thus, latency is improved as compared to other systems that implement out-of-domain functionality after potentially-relevant data chunks are identified and provided to the LLM 206. Moreover, because the new function selection instruction prompt 260 does not *also* ask the LLM 206 to answer the new query 209, the LLM 206 is more likely to return "out-of-domain" at appropriate times instead of hallucinating (e.g., due to confusion stemming from the incorporation of multiple instructions in a single prompt).

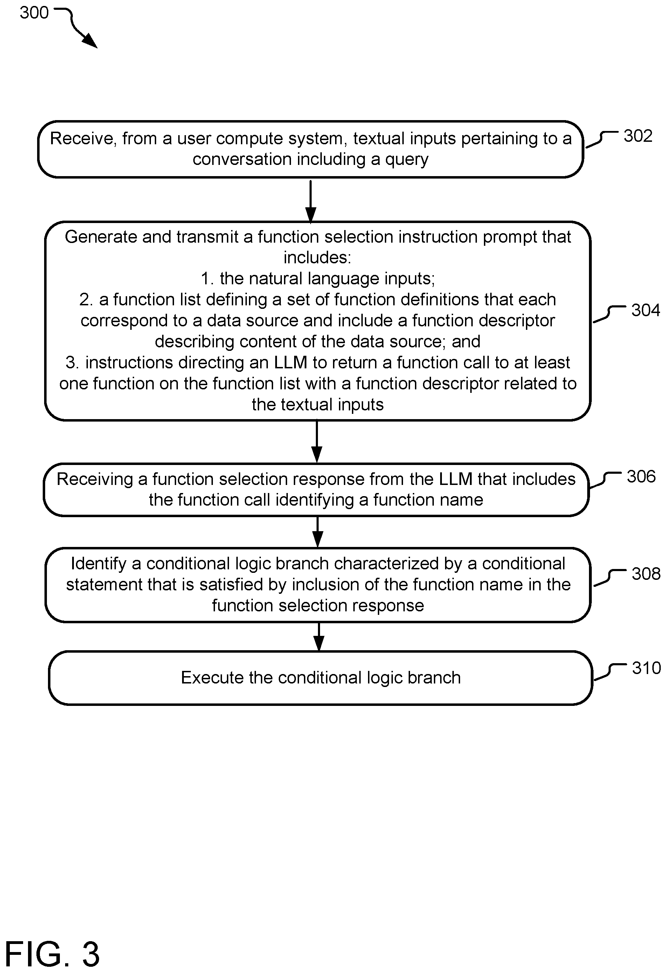

FIG. 3 illustrates example operations 300 for using function calling to facilitate conditional data flows that enable multi-source data retrieval within a generative AI system. A receiving operation 302 receives, from a user compute system, textual (e.g., natural language) inputs pertaining to a conversation. The textual inputs include at least a query and may additionally include other questions asked of the generative AI system, and answers received from the generative AI system, during a course of the same conversation.

In response to the receiving operation 302, a function selection prompt generation and transmission operation 304 generates and transmits a function selection instruction prompt to an LLM. The function selection instruction prompt includes the natural language inputs and a function list including a set of function definitions. Each function definition in the set corresponds to a data source and includes a function descriptor that describes the content of the data source. Additionally, the function selection instruction prompt includes instructions directing an LLM to return a function call to at least one function defined on the function list that has a function descriptor related (e.g., semantically or contextually) to the textual inputs.

The operations 300 further include a second receiving operation 306 that provides for receiving, from the LLM, a function selection response that names a function defined on the function list.. A conditional statement evaluation operation 308 evaluates various conditional statements in different conditional branches of logic to identify an applicable conditional branch of logic (e.g., code) characterized by a conditional statement satisfied by inclusion of the function name in the function selection response.

In response to the conditional statement evaluation operation 308, a conditional branch execution operation 310 executes the applicable conditional branch of logic. For example, the applicable conditional branch of logic provides for mining data chunks from a data source corresponding to the function name. Alternatively, the applicable conditional branch provides for returning an "out-of-domain" response to the user or for finalizing a selection of a data source and generating a context-enhanced query, as generally described with respect to various examples provided in FIG. 2A-2E.

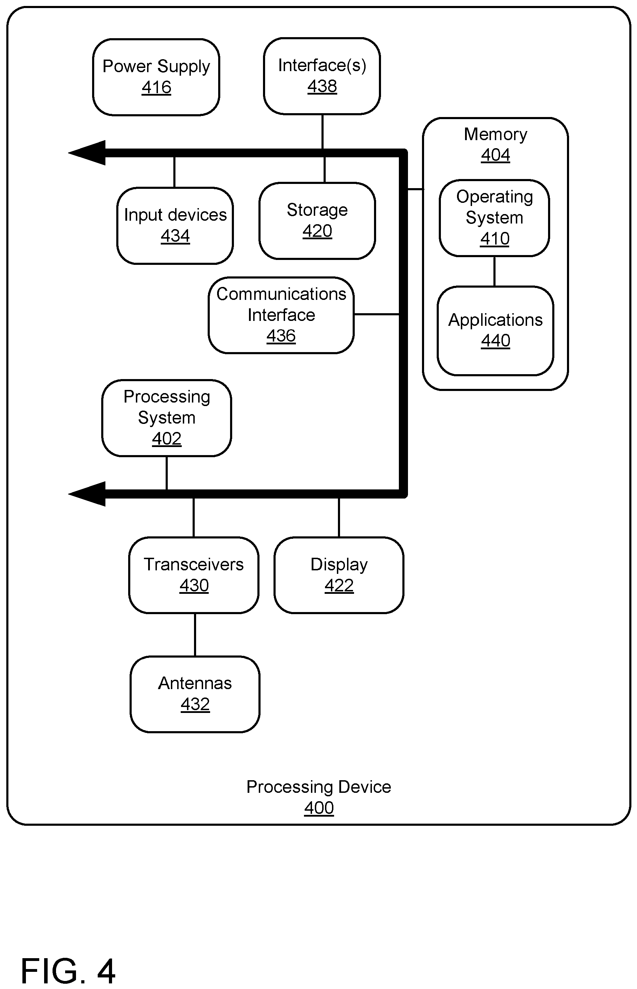

FIG. 4 illustrates an example computing device 400 for use in implementing the described technology. The computing device 400 may be a client computing device (such as a laptop computer, a desktop computer, or a tablet computer), a server/cloud computing device, any other type of computing device, or a combination of these options. The computing device 400 includes one or more hardware processor(s) 402 and a memory 404. The memory 404 generally includes both volatile memory (e.g., RAM) and nonvolatile memory (e.g., flash memory), although one or the other type of memory may be omitted. An operating system 410 resides in the memory 404 and is executed by the processor(s) 402. In some implementations, the computing device 400 includes and/or is communicatively coupled to storage 420.

In the example computing device 400, as shown in FIG. 4, one or more software modules, segments, and/or processors, such as applications 440, are loaded into the operating system 410 on the memory 404 and/or the storage 420 and executed by the processor(s) 402. The applications 440 may include aspects of a generative AI system including a chatbot (e.g., web-based application), an LLM, a RAG assistant, as well as various software-based subcomponents that may be including in the foregoing, such as a transformer, linear projection layers, position embedders, spectral layers, spectral processors, attention layers, attention processors, attention layers, attention networks, processing modules, classifier heads, layer normalizers, multi-layer perceptrons, multi-head self-attention layers, convolutional operators, spectral gating networks, embedding processors, output interfaces, and other program code and modules.

The storage 420 may store an input dataset, a dataset of identified features, embedding spaces, chunks, weights, and other data and be local to the computing device 400 or may be remote and communicatively connected to the computing device 400. In particular, in one implementation, components of a system for classifying a dataset may be implemented entirely in hardware or in a combination of hardware circuitry and software.

The computing device 400 includes a power supply 416, which may include or be connected to one or more batteries or other power sources, and which provides power to other components of the computing device 400. The power supply 416 may also be connected to an external power source that overrides or recharges the built-in batteries or other power sources.

The computing device 400 may include one or more communication transceivers 430, which may be connected to one or more antenna(s) 432 to provide network connectivity (e.g., mobile phone network, Wi-Fi^{®}, Bluetooth^{®}) to one or more other servers, client devices, IoT devices, and other computing and communications devices. The computing device 400 may further include a communications interface 436 (such as a network adapter or an I/O port, which are types of communication devices). The computing device 400 may use the adapter and any other types of communication devices for establishing connections over a wide-area network (WAN) or local-area network (LAN). It should be appreciated that the network connections shown are exemplary and that other communications devices and means for establishing a communications link between the computing device 400 and other devices may be used.

The computing device 400 may include one or more input devices 434 such that a user may enter commands and information (e.g., a keyboard, trackpad, or mouse). These and other input devices may be coupled to the server by one or more interfaces 438, such as a serial port interface, parallel port, or universal serial bus (USB). The computing device 400 may further include a display 422, such as a touchscreen display.

The computing device 400 may include a variety of tangible processor-readable storage media and intangible processor-readable communication signals. Tangible processor-readable storage can be embodied by any available media that can be accessed by the computing device 400 and can include both volatile and nonvolatile storage media and removable and non-removable storage media. Tangible processor-readable storage media excludes intangible, transitory communications signals (such as signals per se) and includes volatile and nonvolatile, removable, and non-removable storage media implemented in any method, process, or technology for storage of information such as processor-readable instructions, data structures, program modules, or other data. Tangible processor-readable storage media includes, but is not limited to, RAM, ROM, EEPROM, flash memory or other memory technology, CDROM, digital versatile disks (DVD) or other optical disk storage, magnetic cassettes, magnetic tape, magnetic disk storage, or other magnetic storage devices, or any other tangible medium which can be used to store the desired information and which can be accessed by the computing device 400. In contrast to tangible processor-readable storage media, intangible processor-readable communication signals may embody processor-readable instructions, data structures, program modules, or other data resident in a modulated data signal, such as a carrier wave or other signal transport mechanism. The term "modulated data signal" means a signal that has one or more of its characteristics set or changed in such a manner as to encode information in the signal. By way of example, and not limitation, intangible communication signals include signals traveling through wired media such as a wired network or direct-wired connection, and wireless media such as acoustic, RF, infrared, and other wireless media.

A generative artificial intelligence system includes a retrieval augmented generation (RAG) assistant that utilizes function calling to facilitate multi-source data retrieval to enhance user queries transmitted to a large language model (LLM). The RAG assistant transmits, to the LLM, a function selection instruction prompt that includes conversation history data, a function list including function definitions that each correspond to a data source, and instructions directing the LLM to return a function call to at least one function defined on the function list identified as relevant to the conversation history data based on a corresponding function descriptor. In response to receiving a function selection response from the LLM that includes the function call, the RAG assistant selects and executes a conditional operation based on a name of the at least one function.

In some aspects, the techniques described herein relate to a method including: receiving, from a user compute system, conversation history data including a query; generating, by a retrieval augmented generative (RAG) assistant, a function selection instruction prompt for a large language model (LLM), the function selection instruction prompt including: the conversation history data; a function list including function definitions that each correspond to a data source and include a function descriptor that describes content of the data source; and instructions directing the LLM to return a function call to at least one function on the function list identified as relevant to the conversation history data based on the corresponding function descriptor; and receiving, at the RAG assistant, a function selection response from the LLM including the function call; based on the least one function identified within the function selection response, selecting a conditional operation from multiple defined conditional operations; and executing, by the RAG assistant, the conditional operation.

In some aspects, the techniques described herein relate to a method, wherein the function list includes an out-of-domain function with a function descriptor that instructs the LLM to select the out-of-domain function in response to determining that no other function on the function list is relevant to the conversation history data.

In some aspects, the techniques described herein relate to a method, wherein the conditional operation includes: transmitting a response to the user compute system in response to determining that the function selection response identifies the out-of-domain function, wherein the response indicates that the query could not be answered using available data sources.

In some aspects, the techniques described herein relate to a method, wherein the function selection instruction prompt further includes potentially-relevant data chunks mined from one or more data sources and the function list includes a particular function with a function descriptor that instructs the LLM to select the particular function in response to determining that the potentially-relevant data chunks are usable to answer the query.

In some aspects, the techniques described herein relate to a method, wherein the method further includes: receiving, from a user compute system, identification of a group of approved data sources, wherein each data source of the group of approved data sources corresponds to a function on the function list.

In some aspects, the techniques described herein relate to a method, further including: determining that the function call identifies a function corresponding to a select data source; retrieving, from the select data source, potentially-relevant data chunks satisfying similarity criteria with the conversation history data; transmitting, to the LLM, a context-enhanced query that includes: the query; context data that includes the potentially-relevant data chunks; and an instruction directing the LLM to answer the context-enhanced query based on the context data; and receiving, from the LLM, an answer to the context-enhanced query; and displaying, on a user display, a response that is based on the answer.

In some aspects, the techniques described herein relate to a method, wherein the instructions direct the LLM to return a function call to one or multiple functions that the LLM identifies as relevant to the conversation history data, and wherein the method further includes: in response to determining that the function selection response includes multiple function calls identifying multiple different data sources: retrieving, from each of the multiple different data sources, potentially-relevant data chunks satisfying similarity criteria with the query; defining, based on the potentially-relevant data chunks retrieved with respect to each of the multiple different data sources, a set of most relevant data chunks; and generating a context-enhanced query that includes the set of most relevant data chunks, the query, and an instruction to answer the query using the set of most relevant data chunks; receiving, from the LLM, an answer to the context-enhanced query; and displaying, on a user display, a response that is based on the answer.

In some aspects, the techniques described herein relate to a method, wherein generating the set of most relevant data chunks further includes: ranking the potentially-relevant data chunks retrieved with respect to each of the multiple different data sources based on respective similarity to the conversation history data; selecting a number N of highest-ranked data chunks.

In some aspects, the techniques described herein relate to a method, wherein generating the set of most relevant data chunks further includes: generating, via a trained summarization model, summaries of the potentially-relevant data chunks; generating one or more combined data chunks that each includes two or more of the summaries concatenated together, wherein the set of most relevant data chunks includes the one or more combined data chunks.

In some aspects, the techniques described herein relate to a system including: a retrieval augmented generative (RAG) assistant stored in memory and executable to: transmit a function selection instruction prompt to a large language model (LLM) in response to receiving, from a user compute system, conversation history data including a query, the function selection instruction prompt including: the conversation history data; a function list including function definitions that each correspond to a data source and include a function descriptor that describes content of the data source; and ; and instructions directing the LLM to return a function call to at least one function on the function list identified as relevant to the conversation history data based on the corresponding function descriptor; and receive, in response to transmission of the function selection instruction prompt, a function selection response from the LLM that includes the function call; select, based on the least one function identified within the function selection response, a conditional operation from multiple defined conditional operations; and execute, by the RAG assistant, the conditional operation.

In some aspects, the techniques described herein relate to a system, wherein the function list includes an out-of-domain function with a function descriptor that instructs the LLM to select the out-of-domain function in response to determining that no other function on the function list is relevant to the conversation history data.

In some aspects, the techniques described herein relate to a system, wherein the at least one function identified within the function selection instruction prompt identifies the out-of-domain function and the conditional operation provides for transmitting a response, to the user compute system, that indicates the query could not be answered using available data sources.

In some aspects, the techniques described herein relate to a system, wherein the function selection instruction prompt further includes potentially-relevant data chunks mined from one or more data sources and the function list includes a particular function with a function descriptor that instructs the LLM to select the particular function in response to determining that the potentially-relevant data chunks are usable to answer the query.

In some aspects, the techniques described herein relate to a system, wherein the RAG assistant is further executable to: determine that the function call corresponds to a select data source: retrieve, from the select data source, potentially-relevant data chunks satisfying similarity criteria with the conversation history data; transmit a context-enhanced query to the LLM, the context-enhanced query including: the query; context data including the potentially-relevant data chunks; and an instruction directing the LLM to answer the context-enhanced query based on the context data; and receive, from the LLM, an answer to the context-enhanced query; and display, on a user display, a response that is based on the answer.

In some aspects, the techniques described herein relate to a system, wherein the instructions in the function selection instruction prompt direct the LLM to return function calls to one or multiple functions that the LLM identifies as relevant to the conversation history data, and wherein the RAG assistant is further executable to: determine that the function selection response includes multiple function calls corresponding to multiple different data sources: retrieve, from each of the multiple different data sources, potentially-relevant data chunks satisfying similarity criteria with the conversation history data; define, based on the potentially-relevant data chunks retrieved with respect to each of the multiple different data sources, a set of most relevant data chunks; and generate a context-enhanced query that includes the set of most relevant data chunks, the query, and a final instruction directing the LLM to answer the query using the set of most relevant data chunks; receive from the LLM, an answer to the context-enhanced query; and display, on a user display, a response that is based on the answer.

In some aspects, the techniques described herein relate to a system, wherein the RAG assistant is further executable to: generate the set of most relevant data chunks at least in part by: ranking the potentially-relevant data chunks retrieved with respect to each of the multiple different data sources based on respective similarity to the conversation history data; and selecting a number N of highest-ranked data chunks.

In some aspects, the techniques described herein relate to a system, wherein the RAG assistant is further executable to: generate the set of most relevant data chunks at least in part by: generating, via a trained summarization model, summaries of the potentially-relevant data chunks; and generate one or more combined data chunks that each includes two or more of the summaries concatenated together, wherein the set of most relevant data chunks includes the one or more combined data chunks.

In some aspects, the techniques described herein relate to one or more tangible computer-readable storage media encoding instructions for executing a computer process, the computer process including: receiving, from a user compute system, conversation history data including a query; generating, by a retrieval augmented generative (RAG) assistant, a function selection instruction prompt for a large language model (LLM), the function selection instruction prompt including: the conversation history data; a function list defining: a first set of function definitions, each function definition in the first set corresponding to a data source and including a function descriptor that describes content of the data source; and an out-of-domain function with a function descriptor that instructs the LLM to select the out-of-domain function in response to determining that no other function on the function list is relevant to the conversation history data; instructions directing the LLM to return a function call to at least one function on the function list identified as relevant to the conversation history data based on the corresponding function descriptor; and receiving, at the RAG assistant, a function selection response from the LLM including a call to the out-of-domain function; transmitting a response to the user compute system in response to determining that the function selection response identifies the out-of-domain function, the response indicating that the query could not be answered using available data sources.

In some aspects, the techniques described herein relate to one or more tangible computer-readable storage media, wherein the function selection instruction prompt further includes potentially-relevant data chunks mined from one or more data sources and the function list includes a particular function with a function descriptor that instructs the LLM to select the particular function in response to determining that the potentially-relevant data chunks are usable to answer the query.

In some aspects, the techniques described herein relate to one or more tangible computer-readable storage media, transmitting, to the LLM, a context-enhanced query in response to determining that the function selection response identifies the particular function, the context-enhanced query including: the query, context data including the potentially-relevant data chunks, and an instruction directing the LLM to answer the context-enhanced query based on the context data. Some implementations may comprise an article of manufacture, which excludes software per se. An article of manufacture may comprise a tangible storage medium to store logic and/or data. Examples of a storage medium may include one or more types of computer-readable storage media capable of storing electronic data, including volatile memory or nonvolatile memory, removable or non-removable memory, erasable or non-erasable memory, writeable or re-writeable memory, and so forth. Examples of the logic may include various software elements, such as software components, programs, applications, computer programs, application programs, system programs, machine programs, operating system software, middleware, firmware, software modules, routines, subroutines, operation segments, methods, procedures, software interfaces, application program interfaces (API), instruction sets, computing code, computer code, code segments, computer code segments, words, values, symbols, or any combination thereof. In one implementation, for example, an article of manufacture may store executable computer program instructions that, when executed by a computer, cause the computer to perform methods and/or operations in accordance with the described embodiments. The executable computer program instructions may include any suitable types of code, such as source code, compiled code, interpreted code, executable code, static code, dynamic code, and the like. The executable computer program instructions may be implemented according to a predefined computer language, manner, or syntax, for instructing a computer to perform a certain operation segment. The instructions may be implemented using any suitable high-level, low-level, object-oriented, visual, compiled, and/or interpreted programming language.

The implementations described herein are implemented as logical steps in one or more computer systems. The logical operations may be implemented (1) as a sequence of processor-implemented steps executing in one or more computer systems and (2) as interconnected machine or circuit modules within one or more computer systems. The implementation is a matter of choice, dependent on the performance requirements of the computer system being utilized. Accordingly, the logical operations making up the implementations described herein are referred to variously as operations, steps, objects, or modules. Furthermore, it should be understood that logical operations may be performed in any order, unless explicitly claimed otherwise or a specific order is inherently necessitated by the claim language.

## Claims

1. A method comprising:
receiving, from a user compute system (104) (202), conversation history data (215) (214) including a query (208) (108);
generating, by a retrieval augmented generative (RAG) assistant, a function selection instruction (254) prompt (210) (122) for a large language model (LLM (206) (106)), the function selection instruction (254) prompt (210) (122) including:
the conversation history data (215) (214);
a function list (228) (128) including function definitions that each correspond to a data source and include a function descriptor that describes content of the data source; and
instructions directing the LLM (206) (106) to return a function call to at least one function on the function list (228) (128) identified as relevant to the conversation history data (215) (214) based on the corresponding function descriptor; and
receiving, at the RAG assistant (204) (102), a function selection response (120) (248) (219) (218) (130) from the LLM (206) (106) including the function call;
based on the least one function identified within the function selection response (120) (248) (219) (218) (130), selecting a conditional operation from multiple defined conditional operations (300); and
executing, by the RAG assistant (204) (102), the conditional operation.

2. The method of claim 1, wherein the function list includes an out-of-domain function with a function descriptor that instructs the LLM to select the out-of-domain function in response to determining that no other function on the function list is relevant to the conversation history data.

3. The method of claim 2, wherein the conditional operation includes:
transmitting a response to the user compute system in response to determining that the function selection response identifies the out-of-domain function, wherein the response indicates that the query could not be answered using available data sources.

4. The method of claim 3, wherein the function selection instruction prompt further includes potentially-relevant data chunks mined from one or more data sources and the function list includes a particular function with a function descriptor that instructs the LLM to select the particular function in response to determining that the potentially-relevant data chunks are usable to answer the query.

5. The method of claim 1, wherein the method further comprises:
receiving, from a user compute system, identification of a group of approved data sources,
wherein each data source of the group of approved data sources corresponds to a function on the function list.

6. The method of claim 1, further comprising:
determining that the function call identifies a function corresponding to a select data source;
retrieving, from the select data source, potentially-relevant data chunks satisfying similarity criteria with the conversation history data;
transmitting, to the LLM, a context-enhanced query that includes:
the query;
context data that includes the potentially-relevant data chunks; and
an instruction directing the LLM to answer the context-enhanced query based on the context data; and
receiving, from the LLM, an answer to the context-enhanced query; and
displaying, on a user display, a response that is based on the answer.

7. The method of claim 1, wherein the instructions direct the LLM to return a function call to one or multiple functions that the LLM identifies as relevant to the conversation history data, and wherein the method further comprises:
in response to determining that the function selection response includes multiple function calls identifying multiple different data sources:
retrieving, from each of the multiple different data sources, potentially-relevant data chunks satisfying similarity criteria with the query;
defining, based on the potentially-relevant data chunks retrieved with respect to each of the multiple different data sources, a set of *most relevant data chunks;* and
generating a context-enhanced query that includes the set of most relevant data chunks, the query, and an instruction to answer the query using the set of most relevant data chunks;
receiving, from the LLM, an answer to the context-enhanced query; and
displaying, on a user display, a response that is based on the answer.

8. The method of claim 7, wherein generating the set of most relevant data chunks further comprises:
ranking the potentially-relevant data chunks retrieved with respect to each of the multiple different data sources based on respective similarity to the conversation history data; and selecting a number N of highest-ranked data chunks; or
generating, via a trained summarization model, summaries of the potentially-relevant data chunks; and generating one or more combined data chunks that each includes two or more of the summaries concatenated together, wherein the set of most relevant data chunks includes the one or more combined data chunks.

9. A system comprising:
a retrieval augmented generative (RAG) assistant stored in memory (404) and executable to:
transmit a function selection instruction (254) prompt (210) (122) to a large language model (LLM (206) (106)) in response (120) to receiving, from a user compute system (104) (202), conversation history data (215) (214) including a query (208) (108), the function selection instruction (254) prompt (210) (122) including:
the conversation history data (215) (214);
a function list (228) (128) including function definitions that each correspond to a data source and include a function descriptor that describes content of the data source; and
instructions directing the LLM (206) (106) to return a function call to at least one function on the function list (228) (128) identified as relevant to the conversation history data (215) (214) based on the corresponding function descriptor; and
receive, in response (120) to transmission of the function selection instruction (254) prompt (210) (122), a function selection response (120) (248) (219) (218) (130) from the LLM (206) (106) that includes the function call;
select, based on the least one function identified within the function selection response (120) (248) (219) (218) (130), a conditional operation from multiple defined conditional operations (300); and
execute, by the RAG assistant (204) (102), the conditional operation.

10. The system of claim 9, wherein the function list includes an out-of-domain function with a function descriptor that instructs the LLM to select the out-of-domain function in response to determining that no other function on the function list is relevant to the conversation history data.

11. The system of claim 10, wherein:
the at least one function identified within the function selection instruction prompt identifies the out-of-domain function and the conditional operation provides for transmitting a response, to the user compute system, that indicates the query could not be answered using available data sources; or
the function selection instruction prompt further includes potentially-relevant data chunks mined from one or more data sources and the function list includes a particular function with a function descriptor that instructs the LLM to select the particular function in response to determining that the potentially-relevant data chunks are usable to answer the query.

12. The system of claim 9, wherein the RAG assistant is further executable to:
determine that the function call corresponds to a select data source:
retrieve, from the select data source, potentially-relevant data chunks satisfying similarity criteria with the conversation history data;
transmit a context-enhanced query to the LLM, the context-enhanced query including:
the query;
context data including the potentially-relevant data chunks; and
an instruction directing the LLM to answer the context-enhanced query based on the context data; and
receive, from the LLM, an answer to the context-enhanced query; and
display, on a user display, a response that is based on the answer.

13. The system of claim 9, wherein the instructions in the function selection instruction prompt direct the LLM to return function calls to one or multiple functions that the LLM identifies as relevant to the conversation history data, and wherein the RAG assistant is further executable to:
determine that the function selection response includes multiple function calls corresponding to multiple different data sources:
retrieve, from each of the multiple different data sources, potentially-relevant data chunks satisfying similarity criteria with the conversation history data;
define, based on the potentially-relevant data chunks retrieved with respect to each of the multiple different data sources, a set of most relevant data chunks; and
generate a context-enhanced query that includes the set of most relevant data chunks, the query, and a final instruction directing the LLM to answer the query using the set of most relevant data chunks;
receive from the LLM, an answer to the context-enhanced query; and
display, on a user display, a response that is based on the answer.

14. The system of claim 13, wherein the RAG assistant is further executable to:
generate the set of most relevant data chunks at least in part by:
ranking the potentially-relevant data chunks retrieved with respect to each of the multiple different data sources based on respective similarity to the conversation history data; and selecting a number N of highest-ranked data chunks; or
generating, via a trained summarization model, summaries of the potentially-relevant data chunks; and generate one or more combined data chunks that each includes two or more of the summaries concatenated together, wherein the set of most relevant data chunks includes the one or more combined data chunks.

15. One or more tangible computer-readable storage (420) media encoding instructions for executing a computer process, the computer process comprising:
receiving, from a user compute system (104) (202), conversation history data (215) (214) including a query (208) (108);
generating, by a retrieval augmented generative (RAG) assistant, a function selection instruction (254) prompt (210) (122) for a large language model (LLM (206) (106)), the function selection instruction (254) prompt (210) (122) including:
the conversation history data (215) (214);
a function list (228) (128) defining:
a first set of function definitions, each function definition in the first set corresponding to a data source and including a function descriptor that describes content of the data source; and
an out-of-domain function with a function descriptor that instructs the LLM (206) (106) to select the out-of-domain function in response (120) to determining that no other function on the function list (228) (128) is relevant to the conversation history data (215) (214);
instructions directing the LLM (206) (106) to return a function call to at least one function on the function list (228) (128) identified as relevant to the conversation history data (215) (214) based on the corresponding function descriptor; and
receiving, at the RAG assistant (204) (102), a function selection response (120) (248) (219) (218) (130) from the LLM (206) (106) including a call to the out-of-domain function;
transmitting a response (120) to the user compute system (104) (202) in response (120) to determining that the function selection response (120) (248) (219) (218) (130) identifies the out-of-domain function, the response (120) indicating that the query (208) (108) could not be answered using available data sources.
